# EUROPÄISCHE PATENTSCHRIFT

(11) **EP 0 875 460 B1**
(45) Veröffentlichungstag und Bekanntmachung des Hinweises auf die Patenterteilung: **09.02.2000**
(21) Anmeldenummer: 97810586.4
(22) Anmeldetag: 21.08.1997
(51) Int. Cl.: B65D 1/04, B65D 81/32

(54) **Im Blasverfahren hergestellte Mehrkammerflasche aus Kunststoff**
Multi-compartment plastic bottle made by blowing
Bouteille en plastique à plusieurs compartiments réalisée par soufflage

(30) Priorität: 02.05.1997 CH 103897
(43) Veröffentlichungstag der Anmeldung: 04.11.1998
(73) Patentinhaber: SOPLAR SA, CH-9450 Altstätten (CH)
(72) Erfinder: Künz, Hans, 6971 Hard (AT)
(74) Vertreter: Riederer, Conrad A., Dr.

(56) Entgegenhaltungen:
- DE-A- 1 657 199
- DE-A- 3 531 568
- DE-C- 827 537
- US-A- 4 600 130
- US-A- 5 062 550
- US-A- 5 115 946
- US-A- 5 328 061

## Beschreibung

Die Erfindung betrifft eine im Blasverfahren hergestellte Mehrkammerflasche aus Kunststoff mit einem Stutzen und mindestens zwei voneinander getrennten Kammern, deren Wände durch eine Rippe miteinander verbunden sind und im Bereich des Stutzens je eine Oeffnung aufweisen, von welchen Kanäle nach aussen führen.

Es sind bereits Mehrkammerflaschen im Handel. Sie dienen beispielsweise als Gefässe für Zweikomponenten-Klebstoff. Zu diesem Zweck sind die Kammern vollständig voneinander getrennt und mit je einem Stutzen versehen.

Es besteht ein Bedürfnis für Mehrkammerflaschen, derern Kammern eine gemeinsame Mündung aufweisen. Bis jetzt sind jedoch keine solchen Flaschen im Handel anzutreffen.

Die DE-A-1 657 199 zeigt einen Mehrkammerbehälter zur dosierten Abgabe von mehreren Flüssigkeiten, bei dem sich eine Rippe durch die ganze Flasche erstreckt und so die ganze Flasche in zwei Hälften aufteilt, die lediglich durch die Rippe miteinander verbunden sind. Dadurch werden im Flaschenkörper zwei voneinander getrennte Kammern und im Stutzen zwei voneinander getrennte Kanäle gebildet. Nachteilig ist dabei die geringe Stabilität der Flasche, da die beiden Flaschenhälften über die ganze Länge lediglich durch eine dünne Rippe miteinander verbunden sind. Nachteilig ist auch die Spaltung des Stutzens, weil dadurch die Gewindegänge unterbrochen werden. Es ist auch zu befürchten, dass ein aufgeschraubter Deckel nur schlecht dichtet.

Erfindungsgemäss ist eine Mehrkammerflasche der eingangs erwähnten Gattung dadurch gekennzeichnet, dass die Rippe lediglich die Wände der Kammern miteinander verbindet, dass der Stutzen durch einen Ausguss abgeschlossen ist, in welchem die Kanäle ausgebildet sind, und dass diese Kanäle von den Oeffnungen der Kammern zu einem Ausgussorgan führen.

Zweckmässigerweise ist die Oeffnung einer Kammer koaxial zum Stutzen angeordnet. Dies ist insbesondere von Vorteil, wenn die Kammern nur teilweise voneinander getrennt sind, also miteinander kommunizieren und somit die Mehrkammerflasche durch eine einzige Oeffnung abgefüllt werden kann. In diesem Falle erleichtert die koaxiale Anordnung der Oeffnung das Abfüllen der Flasche.

Der Ausguss schiesst den Stutzen ab und weist Kanäle auf, welche von den Oeffnungen der Kammern zu einem Ausgussorgan führen. Dadurch kann die Mehrkammerflasche zum gleichzeitigen Abgeben von verschiedenen Materialien, z.B. zur Bildung von Mehrkomponentenmaterial, verwendet werden.

Vorteilhaft weist die Flasche einen eingesetzten Ausguss auf.

Vorteilhaft ist der Ausguss mit einem Befestigungsorgan, z.B. mit einer Rasteinrichtung, versehen, welche an einem entsprechenden Befestigungsorgan, am Stutzen befestigbar ist. Es ist auch möglich, den Ausguss zweiteilig auszugestalten, z.B. aus einem Ausgussteil und einem Befestigungsteil.

Ausführungsbeispiele der Erfindung werden nachfolgend unter Bezugnahme auf die Zeichnungen beschrieben. Es zeigt:
- Fig.1: einen Schnitt durch eine Zweikammerflasche mit Ausguss,
- Fig.2: die Flasche von Figur 1 ohne Ausguss von oben betrachtet,
- Fig.3: eine vergrösserte Darstellung des oberen Teils von Figur 1,
- Fig.4: einen Schnitt durch eine Dreikammerflasche mit Ausguss,
- Fig.5: eine Ansicht von oben der Flasche von Figur 4, jedoch ohne Ausguss, und
- Fig.6: eine vergrösserte Darstellung des oberen Teils von Figur 4.

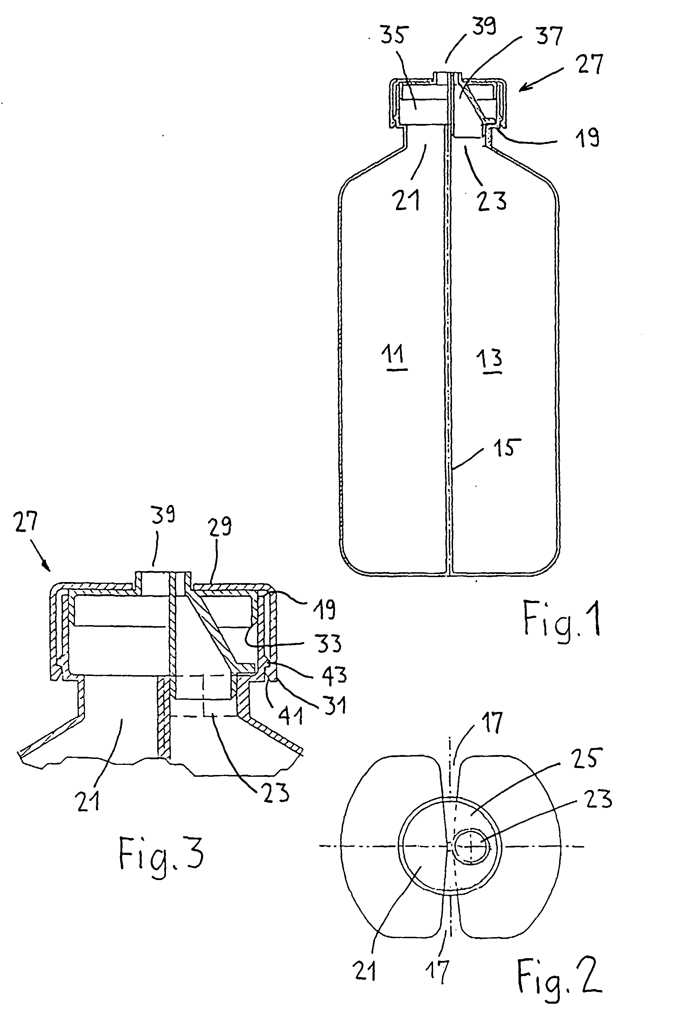

Die in Figuren 1 und 2 dargestellte Mehrkammerflasche ist im Blasverfahren aus Kunststoff herstellbar. Sie besitzt zwei Kammern 11,13, welche durch eine Rippe 15 miteinander verbunden sind. Die Rippe 15 wird beim Schliessen der Blasform gebildet, indem die beiden Blasformhälften den Schlauch entlang einer vertikalen Linie zusammenpressen, so dass die beiden gegenüberliegenden Wände miteinander verbunden werden. Dabei entstehen auch die in Figur 2 sichtbaren Einbuchtungen 17. Die Kammern 11,13 besitzen im Bereich des Stutzens 19 Oeffnungen 21,23, welche in diesen Stutzen münden. Die Oeffnung 23 ist zweckmässigerweise rohrförmig. Sie befindet sich im Stutzenboden 25. Bei koaxialer Anordnung der Öffnung 23 wird das Abfüllen der Flasche erleichtert. Die andere Oeffnung 21 ist praktisch halbkreisförmig.

Die Flasche weist einen eingesetzten Ausguss 27 auf, welcher nun unter Bezugnahme auf die Figur 3 beschrieben wird. Beim dargestellten Ausführungsbeispiel besteht der Ausguss aus dem eigentlichen Ausgussteil 29 und dem Befestigungsteil 31. Es wäre aber auch möglich, den Ausguss 27 einstückig zu fertigen. Der Ausgussteil besitzt einen Flansch 33, welcher den Stutzen 19 abschliesst. Weiter besitzt der Ausgussteil 29 Kanäle 35,37, welche von den Oeffnungen 21,23 der Kammern 11,13 zu einem Ausgussorgan 39 führen. Das Befestigungsteil 31 ist über den Stutzen 19 mit eingesetztem Ausgussteil gestülpt und mit einem Befestigungsorgan 41, z.B. in Form einer Rastnase, mit einem entsprechenden Befestigungsorgan 43 des Stutzens 19 verbunden.

Die Wandstärke der beschriebenen Mehrkammerflasche ist zweckmässigerweise so dünn ausgebildet, dass der z.B. pastöse Inhalt der Flasche durch Druck herausgepresst werden kann. Es ist aber dem Fachmann ersichtlich, dass bei geeigneter Ausbildung der Flasche sich diese auch für flüssigen oder pulverförmigen Inhalt eignet.

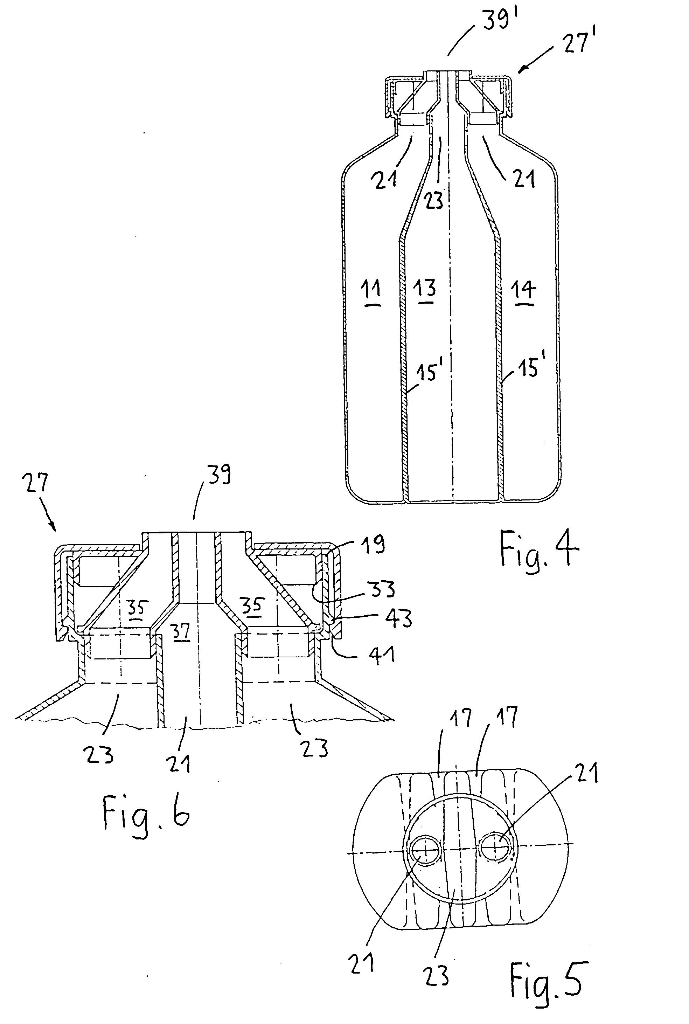

Die Dreikammerflasche mit den Kammern 11,13,14 gemäss den Figuren 4 bis 6 ist analog zur Zweikammerflasche gemäss den Figuren 1 bis 3 ausgebildet, so dass im wesentlichen auf die vorangegangene Beschreibung verwiesen werden kann. Statt eine Rippe sind zwei Rippen 15' vorgesehen, die ebenfalls über einen wesentlichen Teil der Flasche senkrecht verlaufen. Der Ausguss 27' ist so ausgebildet, dass alle drei Kammern 11,13,14 mit dem Ausgussorgan 39' in Verbindung stehen. Wie aber Figur 4 zeigt, ist es z.B. möglich, die Rippen im oberen Teil der Flasche konisch zueinander verlaufen zu lassen. Dem Fachmann sind aber beliebige Gestaltungsmöglichkeiten offen. So wäre es beispielsweise auch möglich, mehrere Kammern sternförmig um eine zentrale Rippe sternförmig anzuordnen, was allerdings eine kompliziertere Blasform erfordern würde.

Es sind verschiedene Aenderungen möglich, ohne vom Erfindungsgedanken abzuweichen. So kann beispielsweise der Ausguss 27,27' so ausgebildet werden, dass die Kanäle 35,37 koaxial angeordnet sind. Beim Auspressen von pastösem Material umgibt dann das Material aus der einen Kammer das Material aus der anderen Kammer.

## Patentansprüche

1. Im Blasverfahren aus Kunststoff hergestellte Mehrkammerflasche mit einem Stutzen und mindestens zwei voneinander getrennten Kammern (11,13,15), deren Wände durch eine Rippe (15) miteinander verbunden sind und im Bereich des Stutzens (19) je eine Oeffnung (21,23) aufweisen, von welchen Kanäle (35,37) nach aussen führen, dadurch gekennzeichnet, daß die Rippe (15) lediglich die Wände der Kammern (11,13,15) miteinander verbindet, dass der Stutzen (19) durch einen Ausguss (27) abgeschlossen ist, in welchem die Kanäle (35,37) ausgebildet sind, und dass diese Kanäle von den Oeffnungen (21,23) der Kammern (11,13,15) zu einem Ausgussorgan (39) führen.

2. Mehrkammerflasche nach Anspruch 1, dadurch gekennzeichnet, dass die Oeffnung (23) einer Kammer (13) koaxial zum Stutzen (19) angeordnet ist.

3. Mehrkammerflasche nach Anspruch 1 oder 2, dadurch gekennzeichnet, dass der Stutzen (19) einen Stutzenboden (25) aufweist, in welchem sich die Oeffnungen (21,23) befinden.

4. Mehrkammerflasche nach einem der Ansprüche 1 bis 3, dadurch gekennzeichnet, dass mehrere Kammern sternförmig um eine zentrale Rippe angeordnet sind.

5. Mehrkammerflasche nach einem der Ansprüche 1 bis 4, dadurch gekennzeichnet, dass der Ausguss (27) mit einem Befestigungsorgan (41), z.B. Rastmitteln, versehen ist, welche an einem entsprechenden Befestigungsorgan (43) am Stutzen (19) befestigbar ist.

6. Mehrkammerflasche nach einem der Ansprüche 1 bis 5, dadurch gekennzeichnet, dass der Ausguss aus einem Ausgussteil (29) und einem Befestigungsteil (31) besteht.

## Claims

1. Multichamber bottle manufactured from plastic by the blowing process and having a neck and at least two chambers (11, 13, 15) which are separate from one another and the walls of which are connected to one another by a rib (15) and each have, in the region of the neck (19), an opening (21, 23) from which ducts (35, 37) lead towards the outside, characterised in that the rib (15) merely connects the walls of the chambers (11, 13, 15) to one another, that the neck (19) is closed by an outlet (27) in which the ducts (35, 37) are constructed, and that the said ducts lead from the openings (21, 23) of the chambers (11, 13, 15) to an outlet member (39).

2. Multichamber bottle according to claim 1,
characterised in that the opening (23) of one chamber (13) is disposed coaxially with the neck (19).

3. Multichamber bottle according to claim 1 or 2,
characterised in that the neck (19) has a neck base (25) in which the openings (21, 23) are situated.

4. Multichamber bottle according to one of claims 1 to 3,
characterised in that a number of chambers are disposed around a central rib in a star-shaped manner.

5. Multichamber bottle according to one of claims 1 to 4,
characterised in that the outlet (27) is provided with a fastening member (41), for example latching means, which can be fastened to a corresponding fastening member (43) on the neck (19).

6. Multichamber bottle according to one of claims 1 to 5,
characterised in that the outlet consists of an outlet part (29) and a fastening part (31).

## Revendications

1. Bouteille en plastique à plusieurs compartiments réalisée par soufflage, comprenant une tubulure et au moins deux compartiments (11, 13, 15) séparés l'un de l'autre, dont les parois sont reliées l'une à l'autre par une nervure (15) et présentent chacune une ouverture (21, 23) dans la zone de la tubulure (19), à partir de laquelle des canaux (35, 37) conduisent vers l'extérieur, caractérisée en ce que la nervure (15) relie seulement les parois des compartiments (11, 13, 15), en ce que la tubulure (19) est fermée par un bec (27) dans lequel les canaux (35, 37) sont formés, et en ce que ces canaux conduisent des ouvertures (21, 23) des compartiments (11, 13, 15) à un organe d'écoulement (39).

2. Bouteille à plusieurs compartiments selon la revendication 1, caractérisée en ce que l'ouverture (23) d'un compartiment (13) est disposée coaxialement à la tubulure (19).

3. Bouteille à plusieurs compartiments selon la revendication 1 ou 2, caractérisée en ce que la tubulure (19) présente un fond de la tubulure (25) dans lequel se trouvent les ouvertures (21, 23).

4. Bouteille à plusieurs compartiments selon l'une des revendications 1 à 3, caractérisée en ce que plusieurs compartiments sont disposés en étoile autour d'une nervure centrale.

5. Bouteille à plusieurs compartiments selon l'une des revendications 1 à 4, caractérisée en ce que le bec (27) est muni d'un organe de fixation (41), par exemple des moyens d'enclenchement, qui peut être fixé sur un organe de fixation (43) correspondant sur la tubulure (19).

6. Bouteille à plusieurs compartiments selon l'une des revendications 1 à 5, caractérisée en ce que le bec est constitué d'une partie d'écoulement (29) et d'une partie de fixation (31).
